# EUROPEAN PATENT SPECIFICATION

(11) **EP 3 308 600 B1**
(45) Date of publication and mention of the grant of the patent: **21.12.2022**
(21) Application number: 16732405.2
(22) Date of filing: 08.06.2016
(51) Int. Cl.: H04W 84/20

(54) **COMMUNICATION DEVICE AND NETWORK USING TDMA RADIO COMMUNICATION PROTOCOL**
KOMMUNIKATIONSVORRICHTUNG UND NETZWERK UNTER VERWENDUNG EINES TDMA-FUNKKOMMUNIKATIONSPROTOKOLLS
DISPOSITIF ET RÉSEAU DE COMMUNICATION UTILISANT UN PROTOCOLE DE RADIOCOMMUNICATION AMRT

(30) Priority: 10.06.2015 US 201562173692 P
(43) Date of publication of application: 18.04.2018
(73) Proprietor: 3M Innovative Properties Company, St. Paul, MN 55133-3427 (US)
(72) Inventor: KIHLBERG, Roger, 19189 Sollentuna (SE); JOELSSON, Martin V., 56633 Habo (SE); APELQVIST, Stefan M., 19189 Sollentuna (SE); HANSSON, Henric L. O., 19189 Sollentuna (SE)
(74) Representative: Mathys & Squire
(86) International application number: PCT/US2016/036459
(87) International publication number: WO 2016/200950

(56) References cited:
- KR-A- 20090 032 582
- US-A1- 2011 069 841
- US-A1- 2012 106 520
- US-A1- 2012 220 237
- US-A1- 2014 198 778
- US-A1- 2015 043 568
- US-B1- 8 718 301

## Description

### Field of the Technology

The present application relates to communication devices. More specifically, the present application relates to a baseless communication network.

### Background

US 2014/198778 discloses a first radio having duplex communication with a second radio and a third radio, without using a base station by using a multiple-access protocol system wherein the first radio is configured to switch back and forth between being a master radio and a slave radio in the multiple-access protocol system, and further discloses that time-division multiplexing is used as the multiple-access protocol system for the first radio, the second radio, and the third radio to communicate and the master radio provides timing synchronization and/or assigns transmission slots for radios in the multiple-access protocol system.

US 8,718,301 discloses a telescopic spatial radio system is provided for sending a signal representative of a sound at a speaker location to a listener location, the signal providing positioning information of the speaker location relative to the listener location and processing the signal using the positioning information to provide a telescopic zoomable binaural sound at the listener location having a simulated spatial relationship based on the position information of the speaker location relative to the listener location. Other examples of prior art are US2012/0106520 and US2012/0220237.

### Summary

The scope of the present application is defined by the appended claims.

### Brief Description of the Figures

The technology may be more completely understood in connection with the following drawings, in which:
FIG. 1 is a schematic of users communicating with each other, according to various embodiments.
FIG. 2 is a perspective view of a communication device, according to various embodiments.
FIG. 3 is a flow chart depicting a portion of the communication process, according to various embodiments.
FIG. 4 is a flow chart depicting a portion of the communication process, according to various embodiments.
FIG. 5A and FIG. 5B are a flow chart depicting a portion of the communication process, according to various embodiments.
FIG. 6 is a flow chart depicting a portion of the communication process, according to various embodiments.
FIG. 7 is a schematic of portions of a communication device, according to various embodiments.

### Detailed Description

The embodiments of the present technology described herein are not intended to be exhaustive or to limit the technology to the precise forms disclosed in the following detailed description. Rather, the embodiments are chosen and described so that others skilled in the art can appreciate and understand the principles and practices of the present technology.

The publications and patents disclosed herein are provided solely for their disclosure. Nothing herein is to be construed as an admission that the inventors are not entitled to antedate any publication and/or patent, including any publication and/or patent cited herein.

In various situations, communication devices can be used by groups of people to communicate with each other. The communication devices can frequently be wireless, such that users are free to move or travel independently of one another.

In some situations, groups of users are in loud or hazardous environments, which require the users to wear personal protective equipment, such as a hearing protection headset, a respirator, and/or a mask. In many cases the personal protective equipment can make communication between users difficult. The communication devices described herein can allow users to more easily communicate even in loud or hazardous environments. In various embodiments, the communication devices described herein can be incorporated to be used with personal protective equipment, such as a hearing protection headset, a respiration mask, a welding mask, or other similar equipment.

In various embodiments, a plurality of communication devices can form a network. The communication devices can be configured to send and receive communication data to and from other communication devices using radio frequency signals. Communication data can include digital signals, such as person to person communications, and underlying data, such as the state of the communication device that is transmitting and an identifier code of a communication device that is transmitting. The person to person communications can be a user's voice signals that are carried by modulated radio waves and sent from a first device to a second device (or to a plurality of devices), such that the users can communicate or talk with each other. The communication devices can send and receive data with each other using a time division multiple access protocol (TDMA). TDMA refers to a channel access method for a shared medium network. TDMA allows a plurality of devices to share the same frequency channel by dividing the signal into different time slots. Devices can transmit in succession, one after the other, each using its own time slot. This can allow multiple devices to share the same frequency channel while each using only one part of its channel capacity. For example, the data stream can be divided into frames, and each frame can be divided into a number of time slots. In one example, each frame is divided into 10 time slots. The time slots may include a guard period before, after or both before and after the time period when data transmission occurs.

In many prior art systems using TDMA, the use of the time slots are allocated to certain devices within a network by a central authority, such as by a base station. TDMA is a method of getting several concurrent channels in the air. Methods and systems for assigning, tracking and using these virtual channels are described herein. In various embodiments, a benefit of these methods and systems is eliminating the need for a base station.

The system described herein does not include a central authority for allocating time slots in various examples, and instead each individual communication device determines which time slot to use for its transmission prior to its transmission based on protocols described in the present disclosure. The determination is based on a knowledge of which other time slots are in current use and according to a time slot order scheme that is configured for and stored in a memory of each of the devices in the network. One example of a time slot determination scheme is that the device ready to transmit will use the lowest available time slot. In this example, if there are ten time slots and time slots one to four are in use, the device will use time slot five. Another example of a time slot determination scheme is that the device ready to transmit will use the highest available time slot. In this example, if there are ten time slots and time slots six to ten are in use, the device will use time slot five. Another possible scheme would use be to use the following order for use of ten time slots: 10, 1, 9, 2, 8, 3, 7, 4, 6, 5. Many other time slot order schemes could be used in addition to these examples. Each device in the network is aware of the time slot order scheme and uses the same time slot order scheme. The time slot order scheme can also be referred to as the predetermined order of time slots.

The communication devices and network described herein can provide automatic and more natural feedback to the user regarding a distance between a user and person communicating with the user by controlling the volume of the output to the user. In addition, the communication devices and network described herein can allow users to easily switch from communicating with a first group of users to communicating with a second group of users, such as by simply increasing the distance between the user and the first group of users and decreasing the distance between the user and the second group of users.

The communication devices described herein can control the output volume level of the communication device, such that the communication device can reduce the output volume based on the distance between the receiving communication device and the transmitting communication device. In various embodiments, the greater the distance between the two devices the more the output volume of the receiving communication device is reduced. Similarly, as a receiving communication device is moved closer to a transmitting communication device the volume output of the receiving device can be increased, such as to mimic the increase in volume a user would hear as they move towards another user that was talking to him/her.

In many situations, the communication devices and network can allow for a user to communicate with first group of people, then move away from the first group of people and towards a second group of people to communicate with the second group of people. In one example, once the user has moved past a threshold distance from the first group of people, the user will no longer hear communications with the first group of people. Once the user has moved within the threshold distance to the second group of people, the user will start to hear communications with the second group of people. When the communication device is beyond the threshold distance, the communication device can be receiving communication data from a different communication device, but the user will not hear any of the communication, because the volume will be reduced to zero. In some examples, the system is configured to use a table to determine how volume will be reduced depending on the distance. In some examples, a table is used to determine how volume will be reduced depending on the distance and the table stores a first threshold.

Configuring a group of users to communicate based on distance from each other can mimic a standard scenario where a person without a communication device enters a conversation with a group of people talking. The configuration can also allow the user to walk or move away from the first group of people and towards a second group of people. In that scenario, at some point the person will want to stop communicating with the first group of people and start communicating with the second group of people. The devices and network described herein can allow a user a more natural conversational experience with different groups, without manually needing to change a channel or frequency to communicate with different groups.

In various embodiments, the network of communication devices can be formed without a designated base station. In various embodiments, the network of communication device can be baseless, such that there is not a single device that is designated as the base or acts as a central authority to allocate the use of the time slots to certain devices within a network. In contrast, in some networks, a designated base unit can receive and transmit all communications, such that all of the devices in the network send and/or receive communication data from the base unit. The network of communication devices described herein does not require a designated base unit. In various embodiments, the network does not require any registration protocol to join the network. In some embodiments, the communication devices can be listening for data to receive, such that a communication device is always able to receive communication data. In other embodiments, the communication devices can be listening for data to receive at selected intervals, such as for 1 millisecond (ms) of every 10 ms, or other intervals. The devices are listening for data on an on-going basis, whether continuously or at intervals, when they are powered on. The devices store that information in memory, so at any point in time, each device is aware of whether another device is in the master state and whether another device is transmitting. When a device is in the master state, that device acts as a beacon to facilitate synchronization to that device. The other devices synchronize to the device in the master state, setting their time counters to match the time counter of the device in the master state.

The term "listening" means that the receiver can be receiving communications from devices in the network, or that the receiver can be receiving a sampling of communications from devices in the network. As used herein, the term "listening" also means that a receiver of the device is linked to a processor and a memory component of the device and the device is configured to store in memory the current status of each time slot in the system.

The devices included in a network of devices can be in one of several states. Each device's ability to transmit data can be dependent upon which state the device is currently in. A device can change states in two different situations. First, a device can change states if the device starts or stops receiving data from another device. Second, a device can change states if the device starts or stops transmitting data to other devices.

In various embodiments, the devices can transmit data to and receive data from other devices using radio frequencies. In some examples, the device can transmit and receive using one of the internationally-reserved Industrial, Scientific and Medical (ISM) radio bands. In some embodiments, the devices can use a frequency of at least 868 MHz. In some embodiments, the devices can one of the ISM radio bands having a frequency of at least 868 MHz, at least 2.4 GHz, or at least 5.725 GHz.

In some embodiments, the states can include a master state, an idle state, a guest state, and a slave state. The devices can change state prior to transmitting or upon receiving communication data. In various embodiments, a single device or no devices can be in the master state. In various embodiments, one device, a plurality of devices, or no devices can be in the idle state. In various embodiments, one device, a plurality of devices, or no devices can be in the guest state. In various embodiments, one device, a plurality of devices, or no devices can be in the slave state.

When a device is in the master state, the device can be transmitting data to one or more other devices. A device in the idle state can be idle, such that it is not sending or receiving any data. A device in the slave state can receive or send data. A device in the guest state can receive data from other devices.

A network, as the term is used herein, is a group of communication devices that are using the same protocols to communicate, and using the same frequency ranges to communicate. The physical distance between each pair of communication devices in the network could limit whether transmissions are actually received.

In various embodiments, all of the devices in the network initially have equal access to being in a master state. If one device is in the master state, that device is configured to behave in a manner somewhat similar to a base unit in that all of the other communication devices can synchronize to the device that is in the master state. However, unlike a base station, if a device in the master state fails or is lost, a different device can enter the master state, such that devices will still be able to transmit and receive data to and from other devices. Because each device in the network has the ability to be in the master state, it is possible to add devices to the network, and have them immediately communicate with the network, without a registration or other handshake protocol with a base station, in some examples of the system. In some embodiments, the network does not have communication-related limits on how many communication devices can be a part of the network.

In various embodiments, all of the devices in the network can all be similar devices, such as similar headsets, similar hearing protection headsets, similar respirator masks, or similar welding helmets. In some embodiments, the devices in the network can include different physical structures, such as some devices being headsets and other devices being respirator masks. Many other examples of forms and different combinations of forms are possible.

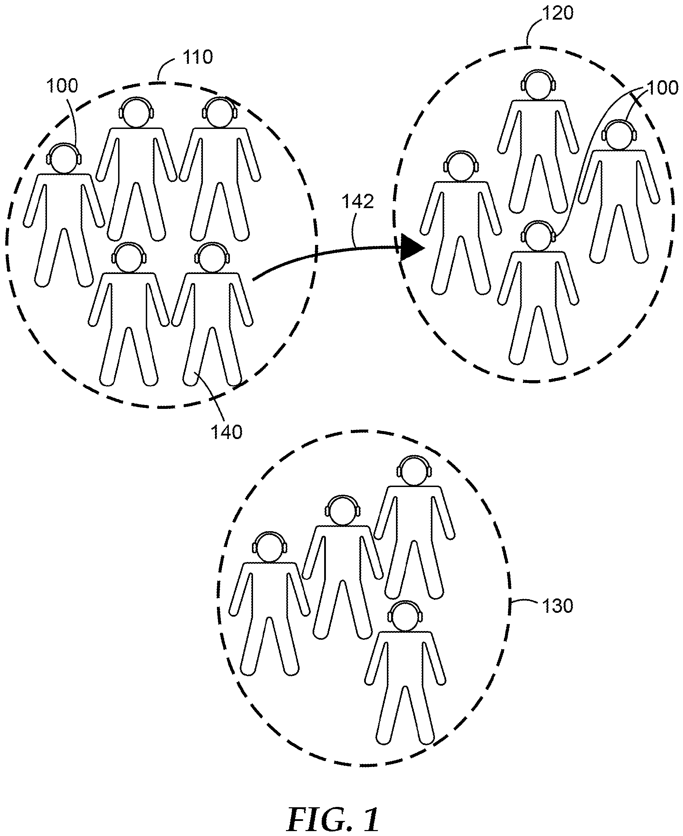

FIG. 1 shows a schematic representing users of communication devices as described herein. Various environments where the communication devices 100 can be used can include various groups of people that only want to communicate with the group they are part of.

FIG. 1 shows a first group or network of users 110, a second group or network of users 120 and a third group or network of users 130. The first group of users 110 can include a plurality of people. Each person in the first group of users 110 can have a communication device 100. The second group of users 120 can include a plurality of people. Each person in the second group of users 120 can have a communication device 100. The third group of users 130 can include a plurality of people. Each person in the third group of users 130 can have a communication device 100.

In some embodiments, a group of users can be limited, such as by requiring an access code or password to join the group. In some embodiments, a user can opt out of a group such as by muting all of the incoming transmissions.

The first group of people 110 can represent a first network of people communicating, such that the members of the first group 110 can communicate with each other but not with people outside of the first group 110. Similarly, the second group of users 120 and the third group of users 130 can be communicating within their groups. In various embodiments, the size of the group can be defined by a physical distance, such as a radius from the device that is currently transmitting communication data.

In various embodiments, the plurality of communication devices can form a network, such as the communication devices in the first group of users 110. The network can include a plurality of communication devices. The communication devices can be configured to send and receive communication data to and from other communication devices. Communication data can include digital signals, such as person to person communications, and underlying data. Examples of underlying data include the state of the communication device that is transmitting, a time clock signal of the communication device that is transmitting and an identifier code of the communication device that is transmitting. In various embodiments, the underlying data can include an input sound level, such as the volume of the transmitting user's speech or the ambient sound. Such underlying data can be used to reproduce increases in volume to the receiving user. The reproduction of increases in volume to the receiving user can override the distance muting described herein, such as to relay a shouted warning or command. In various embodiments, warnings or commands over a certain volume level can override the decreasing volume output based on distance between units function that is described herein, such as to provide a warning or command to devices that are within the radio range. The person to person communications can be the users' voices that are processed and sent from a first device to a second device (or to a plurality of devices), such that the users can communicate or talk with each other. The communication devices can send and receive data with each other using a TDMA protocol. In various embodiments, the TDMA protocol is used in combination with carrier division multiple access (CDMA) protocol, which involves spreading communications over different frequencies.

In various embodiments, all of the communication devices can be initially in an idle state, such as when the communication devices are turned ON. Once a communication device intends to transmit or begins to receive any communication data, the communication device can determine if a communication device within the network is in a master state. A device makes this determination based on the information it has stored in memory regarding the status of each of the time slots. If there is a device transmitting information in the first time slot in the predetermined order of time slots, then that device can be in the master state. Alternatively, a device in the master state could be in any of the time slots, such as when multiple time slots are occupied, the device in the master state is lost and a device in one of the other time slots enters the master state. For example, a first device in the first timeslot is in the master state. The first device stops transmitting and exits the master state, at which point a second device in a different timeslot, such as the second timeslot, can enter the master state. If the second device exits the master state, a third device in the third timeslot can enter the master state. If the communication device is about to send data and there is no other device in the master state, the device can enter the master state, regardless of what time slot the device is in. If the communication device is about to send data and there is another communication device in the master state, the communication device that is about to send data can enter the slave state and take the next available time slot. In some embodiments, the next available time slot is the lowest available time slot. In some embodiments, the next available time slot is the highest available time slot. In other embodiments, the communication device can enter a next available time slot within a predetermined order. Examples of a predetermined order are numerical order, reverse numerical order, and other ordering schema, such as 4,1,3,2 for a four time slot system. In various embodiments, a device can enter the slave state when it receives communication data from a communication device in the master state. In various embodiments, a device can enter the guest state when it receives communication data from a device in the slave state. A device in the guest state can receive communication data from other devices within the network, but will not be able to transmit data to the other devices. In various embodiments, all of the devices within a network synchronize to the device that is in the master state. Devices can synchronize to the device in the master state, such as to reset the internal time count in each device to match the internal time count of the device in the master state. Frequent synchronization is necessary in TDMA systems, because electronic devices utilizing crystals to keep time counts will drift over time. The battery voltage and temperature can affect the amount of time count drift. In prior art systems, the communication devices in a network often sync to a base station. In contrast, in various embodiments of the system described herein, there is no designated base station and each individual device that is in the master state provides a signal in the data header of its communications which causes all of the other devices in the network to move their clocks to match it, at the time of that transmission.

As mentioned above, a network can be defined by a physical distance. In various embodiments, the communication device can relay at least some communication data to a user through a speaker. The speaker can produce a sound wave that can be heard by the user. In various embodiments, the volume of the speaker's output can be at least partially influenced by the receiving device's distance from the sending device. In various embodiments, the volume of the speaker can be inversely related to the distance between the receiving communication device and the sending communication devices, such that as the distance between the two is increased the volume is decreased. A larger distance between two devices can result in a larger reduction of the volume. In various embodiments, the distance between the two devices can be determined using the signal strength, such as the received signal strength indicator (RSSI) value. RSSI is a measurement of power present in a received radio signal. When two communication devices are in closer proximity to each other, the RSSI will be greater than when the devices are further from each other. When RSSI is programmed as a parameter inside of a chip, it is often a parameter value without a measurement unit. In some embodiments and contexts, RSSI is calibrated into decibels (dB) or decibels relative to one milliwatt (dBm). In some examples, the system is configured to use a table to determine how volume will be reduced depending on the distance.

Tables 1 and 2 below show examples of how volume output could be decreased in relation to increases in the distance or range between the devices. The distances in Tables 1 and 2 are expressed in meters (m).

**Table 1**

| RSSI | Approximate Range (m) | Audio Volume |
|---|---|---|
| 250 | 0 | 100% |
| 200 | 2 | 100% |
| 150 | 3 | 100% |
| 100 | 4 | 100% |
| 75 | 6 | 80% |
| 50 | 8 | 25% |
| 25 | 10 | 0% |
| 12 | 20 | 0% |
| 9 | 30 | 0% |
| 6 | 40 | 0% |

**Table 2**

| RSSI | Approximate Range (m) | Audio Volume |
|---|---|---|
| 250 | 0 | 100% |
| 200 | 2 | 100% |
| 150 | 3 | 100% |
| 100 | 4 | 100% |
| 75 | 6 | 100% |
| 50 | 8 | 100% |
| 25 | 10 | 100% |
| 12 | 20 | 50% |
| 9 | 30 | 25% |
| 6 | 40 | 0% |

In various embodiments, when the distance between the transmitting device and the receiving device is greater than a first threshold distance, the volume can be at zero (muted). In various embodiments, when the distance between the transmitting device and the receiving device is greater than a second threshold distance, the volume can be decreased to a non-zero value but not muted. The first threshold distance is larger than the second threshold distance. For example, in the embodiment shown in Table 1 the first threshold distance is 10 m and the second threshold distance is 6 m. For example, in the embodiment shown in Table 2 the first threshold distance is 40 m and the second threshold distance is 20 m. In some embodiments, the distances to volume relationships can be adjustable, such that a technician or user can adjust the volume levels at different distances to meet the needs of the environment in which the devices are being used. In various embodiments, these adjustments can be made in a software configuration file that is stored in the memory of each device in the network.

The first threshold distance is at least 10 m. In various embodiments the first threshold distance can be at least 20 m. In various embodiments, the first threshold distance can be at least 30 m. In various embodiments, the first threshold distance can be at least 40 m. In various embodiments, the first threshold distance can be 40 m or less. In various embodiments, the first threshold distance can be at least 30 m and not more than 50 m. In various embodiments, the first threshold distance is at least 10 m and not more than 50 m. In various embodiments, the first threshold distance can be at least 10 m and not more than 70 m. In various embodiments, the first threshold distance is at least 10 m and not more than 20 m. In various embodiments, the first threshold distance is at least 10 m and not more than 30 m.

In various embodiments, the second threshold distance can be at least 4 m. In various embodiments, the second threshold distance can be at least 6 m. In various embodiments, the second threshold can be at least 8 m. In various embodiments, the second threshold can be 20 m or less. In various embodiments, the second threshold can be 15 m or less. In various embodiments, the second threshold can be 10 m or less. In various embodiments, the second threshold distance can be at least 4 m and not more than 8 m. In various embodiments, the second threshold distance can be at least 4 m and not more than 10 m. In various embodiments, the second threshold distance can be at least 4 m and not more than 14 m. In various embodiments, the second threshold distance can be at least 4 m and not more than 20 m.

In reference to FIG. 1, if user 140 starts to walk away (shown by arrow 142) from the first group of users 110, the volume will be gradually reduced as the user increases his/her distance from a user that is transmitting communication data. As user 140 nears the second group of users 120 (passes the first threshold), the user 140 will begin to hear the communications of the second group of users 120. Once the user is at a distance from a transmitter within the second group of users that is equal to or less than the second threshold, the user 140 will have the volume output at 100%. In various embodiments, each device that is receiving data can adjust the volume based on its distance from the transmitting device.

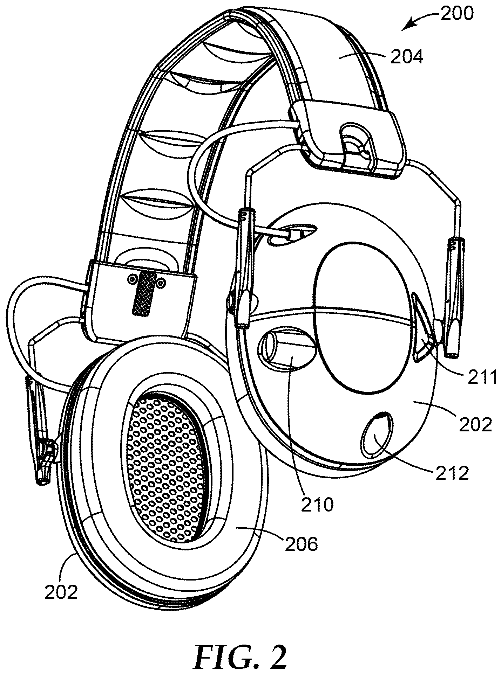

FIG. 2 shows a perspective view of an example of a communication device 200. The communication devices described herein can be incorporated into many different pieces of equipment, such as a headset, a mask, or a respirator.

FIG. 2 shows the communication device 200 in the form of a hearing protection headset. In various embodiments, the headset can include an ear cup 202 and a headband 204. The headset can include two ear cups 202. The headband 204 can couple a first ear cup 202 with a second ear cup 202. The headband 204 can be arced, such as to extend over the top of a user's head while the headset is in use. The headband 204 can be flexible, such as to allow the user to spread the first ear cup 202 from the second ear cup 202 when the user is putting on the headset. The headband 204 can include padding, such as to at least partially conform to the user's head and increase the user's comfort.

The ear cups 202 can be configured to fit at least partially around a user's ear, and be disposed on the side of a user's head while in use. The ear cup 202 can define a cavity. The cavity can be configured for a user's ear, a human ear, to fit within, while the user is wearing the headset. The ear cup 202 can include a seal ring 206. The seal ring 206 can be ring shaped, such as to extend around the user's ear. The seal ring 206 can be flexible and able to conform to the user's head. The seal ring 206 can provide a seal between the ear cup 202 and the user's head, such as to reduce the amount of noise or sound waves that reach the user's ear, thereby at least partially protecting the user's ear from external noises. The seal ring 206 can include leather, cloth, rubber, plastic, or a polymer, such as polyurethane.

In an alternative embodiment, the headset can include a housing that is configured to fit at least partially within the outer portion of a user's ear, such as within a portion of the auricle or pinna. In various embodiments, the headset can include two housings, such as a right housing configured to fit at least partially within the user right ear and a left housing configured to fit at least partially within the user left ear. In various embodiments, the right housing and left housing can be substantially identical, such that the right housing can be used in association with the left ear and the left housing can be used in association with the right ear.

The headset can include a microphone 211 such as to pick up communications from a user. In various embodiments, the headset can include an input connection and a microphone can be connected to the input connection. In various embodiments, a microphone 211 is provided on each of two ear cups.

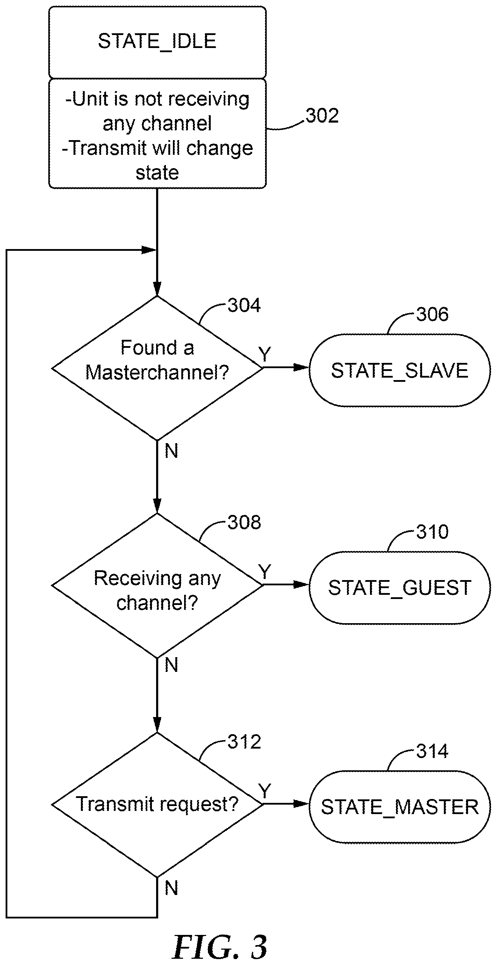

One of the ear cups 202 can include a knob 210. The user can rotate the knob 210 to control the electronics of the communication device, such as to turn the electronics "ON" or "OFF", or to increase or decrease the volume from the speakers in the ear cups 202. Instead of a knob 210, many other types of input devices can be used, including buttons, switches or a remote control device. In various embodiments, the electronics can include a processor. The processor can be configured to carry out the steps discussed below in reference to FIGS. 3-6.

The ear cups 202 can include an input connection 212. The input connection 212 can allow a user to connect an external device into the communication device, such as an AM/FM radio, a two-way radio, an MP3 player, a cellphone, a microphone or the like. The user can hear the external device through the one or more speakers disposed in the ear cups 202. In various embodiments, the input connection 212 can accommodate a 3.5 mm audio input. In various embodiments, the external audio device can be connected to the headset through a wireless connection, such as Bluetooth connection. In various embodiments, the external audio device can be built in or integral with the headset.

A mute button (not shown) or other user input device can be provided on a communication device, in some embodiments, to selectively mute the speakers, selectively turn off the microphone or both. Such controls can allow a user to have privacy or concentration.

In some embodiments, the transmission of data by a communication device can be triggered automatically, such as when threshold voice levels are picked up by a microphone as when using a voice-operated switch. In some embodiments, transmission of data can require an additional user input, in addition to a threshold level of sound being picked up by a microphone. Examples of additional user input that can be required for transmission include a button or other input device (not shown) that is activated once by a user to initiate a transmission or a button or other input device that is held down or otherwise activated throughout the time that the user is speaking. In various embodiments, some or all of the communication devices are push-to-talk (PTT) communication devices.

FIGS. 3-6 show flow charts depicting different aspects of the communication devices and the network the communication devices can create, according to various embodiments. FIG. 3 shows a flow chart depicting how a communication device determines what state it is in, according to an example.

Once a communication device is turned ON, the communication device can be in an idle state 302. When the communication device is in an idle state, the communication device is not transmitting or receiving any communication data. Once a communication device attempts to transmit or begins receiving communication data, the device can leave the idle state. The communication device can leave the idle state and enter the master state, the slave state, or the guest state, such as when the device is about to transmit communication data or begins receiving communication data.

In various embodiments, each device is always listening on all time slots. When a device detects a transmission, the device changes states, if appropriate according to the system described herein. In various embodiments, the device waits until it has detected more than one packet of communication data, such as at least three packets of communication data, before changing states.

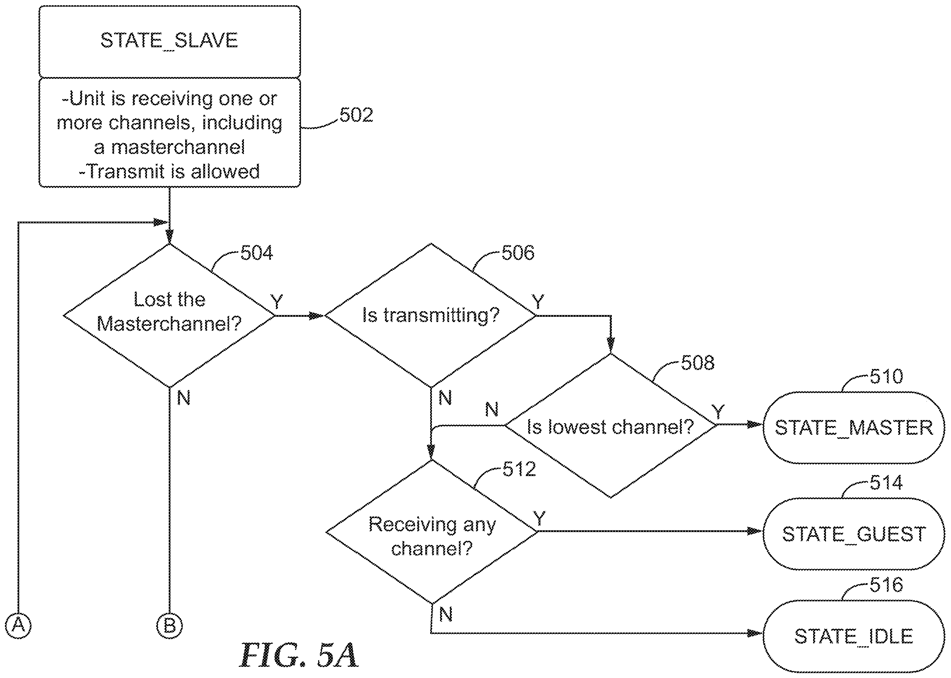

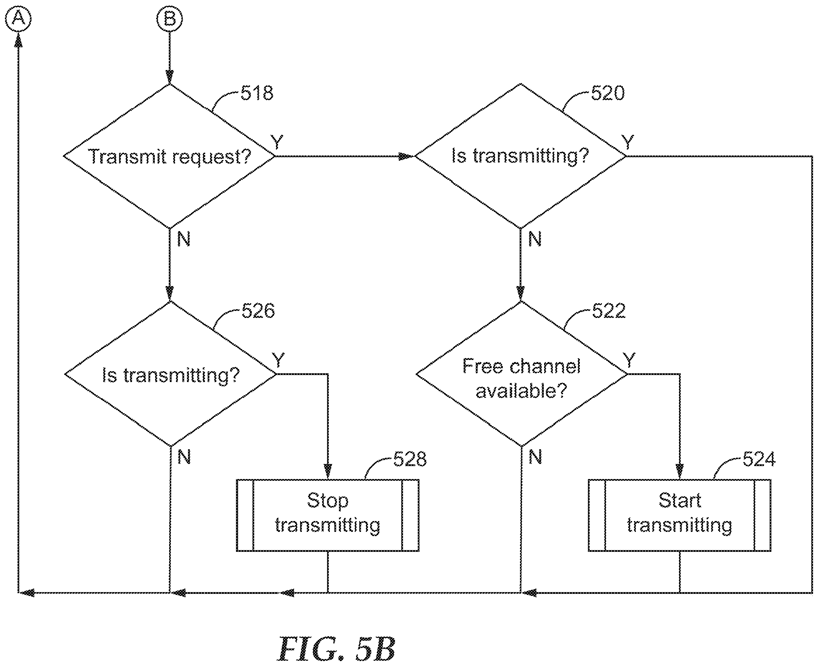

When a communication device is attempting to transmit or begins to receive a communication, the communication device can determine if a different communication device is currently in the master state 304. If the communication device determines that a different communication device is in the master state, the communication device can go from the idle state to the slave state 306. The slave state is described in more detail in regards to FIG. 5.

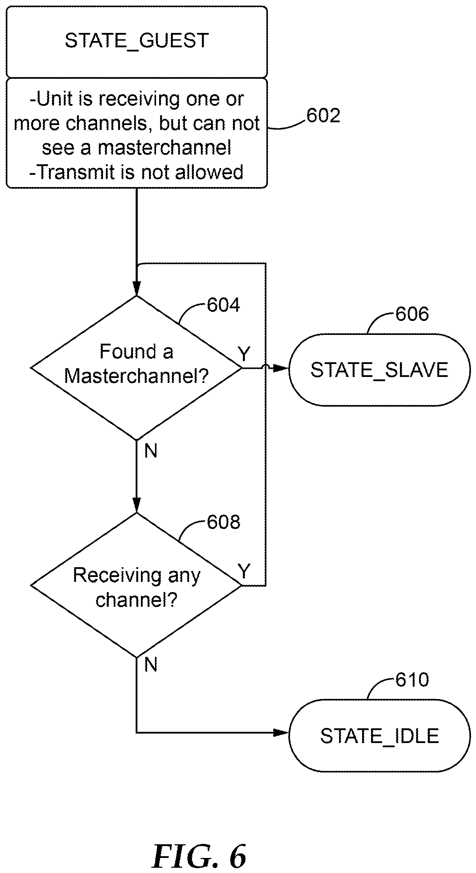

If the communication device determines that there is not a different communication device in the master state, the communication device can determine if it is receiving communication data from a communication device in a non-master state 308. If yes, the communication device can enter the guest state 310. The guest state is described in more detail in regards to FIG. 6.

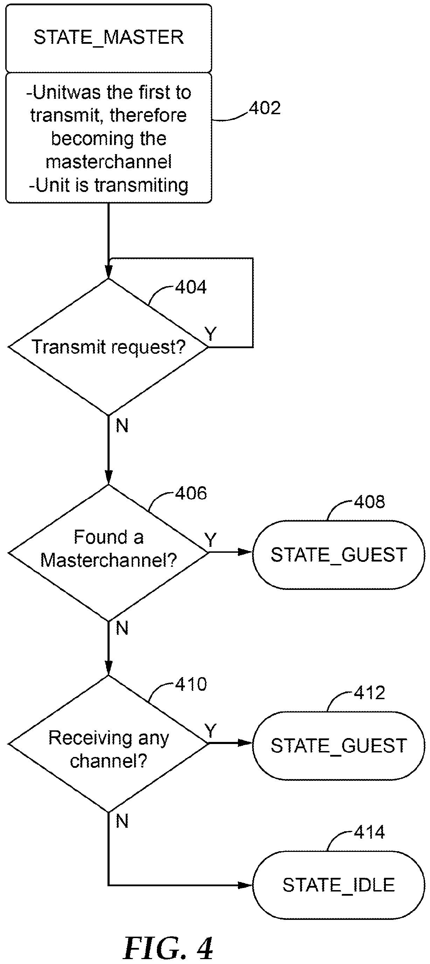

If the communication device does not find a different communication device in the master state and the communication device is attempting to transmit communication data 312, the communication device can enter the master state 314. The master state is described in more detail in regards to FIG. 4.

When a communication device is in the master state, the communication device can transmit communication data. When a communication device is in the slave state, the communication device can transmit or receive communication data. When a communication device is in the guest state, the communication device is able to receive communication data, but the communication device cannot transmit communication data. In various embodiments of the network, all of the devices can synchronize to the communication device in the master state.

FIG. 4 shows a flow chart depicting a portion of the process of a device in the master state, according to various embodiments. A communication device in the master state 402 can be the first communication device that transmitted. In other situations, the communication device in the master state was in the lowest time slot (or other next time slot based on a predetermined order, such as the highest) when the previous communication device in the master state was lost. In various embodiments, the device that was in the master state can be lost, when the other devices have not received any data from the device in the master state within a master transmission time period. In various embodiments, the master transmission time period can be about 0.5 seconds. In various embodiments, the master transmission time period can be at least 0.5 second. In various embodiments, the master transmission time period can be at least 1 second. In various embodiments, the master transmission time period can be at least 1.5 seconds. In various embodiments, the master transmission time period can be less than 3 seconds. In various embodiments, the master transmission time period can be less than 2 seconds. In various embodiments, the master transmission time period can be less than 1.5 seconds. In various embodiments, the master transmission time period can be less than 1 seconds.

When in the master state, a communication device can transmit communication data to other communication devices 404. The communication device in the master state can send communication data as desired. In various embodiments, once the communication device in the master state finishes transmitting, the communication device can enter the slave state, the idle state, or the guest state. In various embodiments, if the device that was in the master state receives communication data from a different unit that has already entered the master state, the device that was in the master state can enter the slave state. In various embodiments, if the device that was in the master state receives communication data from a device that is not in the master state, the device that was in the master state can enter the guest state. If the device that was in the master state is not receiving any communication data, the device can enter the idle state.

If the communication device in the master state is not transmitting communication, such as the communication device is receiving communication data from a different communication device, the communication device in the master state can determine if a different communication device is in the master state 406. If the communication device is receiving communication data from a different communication device in the master state, the communication device can enter the slave state 408.

If the communication device in the master state does not find another communication device in the master state, the communication device can determine if it is receiving communication data from another communication device 410. If the communication device is receiving communication data, the communication device can enter the guest state 412. If the communication device is not receiving communication data from another device, the communication device can enter the idle state 414.

In various embodiments of the system, the network does not define constraints on a number of devices that can be in the slave state. The number of devices that are able to transmit to other devices is equal to the number of time slots, with one of those transmit-capable devices being in the master state. The number of devices that can be in the slave state is unlimited, in various embodiments.

In various embodiments, the system described herein does not include a central authority for allocating time slots but includes a central authority for encryption of communications. In various embodiments, the system described herein does not include a central authority for allocating time slots but includes a central authority for registration of the devices participating in the network. In various embodiments, any encryption and/or registration associated with network access functionality can be decentralized, such that there is not one device that controls access to the network.

FIGS. 5A and 5B together show a flow chart depicting a portion of the process of a device in the slave state, according to various embodiments. FIG. 5B is a continuation of FIG. 5A, with line A from FIG. 5B extending to line A in FIG. 5A, and Line B in FIG. 5A extending to line B in FIG. 5B.

A communication device in the slave state 502 can be a communication device that it is one of the time slots. In various embodiments, there can be ten time slots available for communication devices, such that ten communication devices can be in the slave state in a network of communication device. In various embodiments, there can be four time slots available for communication devices. In various embodiments, there can be at least four time slots and no more than 12 time slots. In various embodiments, there can be at least four time slots and no more than 20 time slots. In the slave state a communication device can transmit communication data to other communication devices and the communication device can receive communication data from other communication devices.

A communication device in the slave state can determine if the communication device in the master state has been lost or not 504. If the communication device in the master state has been lost, the communication device in the slave state can determine if it is transmitting 506. If the communication device in the slave state is transmitting, the communication device can determine if it is in the lowest time slot 508. If the communication device is in the lowest time slot, the communication device can enter the master state 510. If the communication device is not in the lowest time slot, the communication device can finish its transmission and the communication device that was in the first time slot of the predetermined order of time slots can enter the master state.

In other embodiments, when the communication device in the master state is lost, the communication device in the highest time slot can enter the master state. In another embodiment, the communication device that enters the master state can be based on a predetermined order, such as a random predetermined order. A predetermined order can have the numbered time slots in a designated order. In one example, when there are four time slots, the order could be the third time slot, then the first time slot, then the fourth time slot and then the second time slot.

If the communication device in the master state was lost and a communication device in the slave state is not trying to transmit 506, the communication device in the slave state can determine if it is receiving any communication data 512. If the communication device is receiving communication data from a different communication device, the communication device in the slave state can enter the guest state 514. If the communication device is not receiving any communication data, the communication device can enter the idle state 516. In various embodiments, the communication device can determine that it is not receiving any communication data if the device does not receive any data within a given time period, such as 0.5 seconds. In another embodiment, the communication device can determine that it is not receiving any communication data is the device does not receive any data within a number of time slots, such as at least four time slots and not more than 50 time slots, or 16 time slots.

If the communication device in the master state has not been lost, the communication device in the slave state can determine if it is trying to transmit 518. If the communication device in the slave state is trying to transmit, it can determine if it is transmitting 520. If it is transmitting, the communication device transmits the communication data and remains in the slave state. If it is not transmitting, but is attempting to, the communication device can determine if a time slot is available 522. If a timeslot is not available, the communication device will not be able to transmit. If a time slot is available, the communication device will begin to transmit 524.

In various embodiments, each device can internally keep track of which timeslots are occupied, and therefore also which timeslots is the next available in the predetermined order of time slots. A device that wants to transmit can take the next available timeslot. Once the device starts to transmit, the device can remain in the timeslot for the entire transmission.

If the communication device in the slave state is not requesting to transmit, it can determine if it is transmitting 526. If it is transmitting, the transmission can be stopped 528.

FIG. 6 shows a flow chart depicting a portion of the process of a device in the guest state, according to various embodiments. A communication device in the guest state 602 can receive communication data from other communication devices in the network, but is unable to (while in the guest state) send communication data to other devices.

A communication device in the guest state can determine if another communication device is in the master state 604. If the communication device finds a different communication device in the master state, the communication device can enter the slave state 606. If the communication device does not find a different communication device in the master state, the communication device can determine if it is receiving communication data 608. If it is receiving communication data, the communication device can receive the data and remain in the guest state. If the communication device is not receiving any communication data, the communication device can enter the idle state 610.

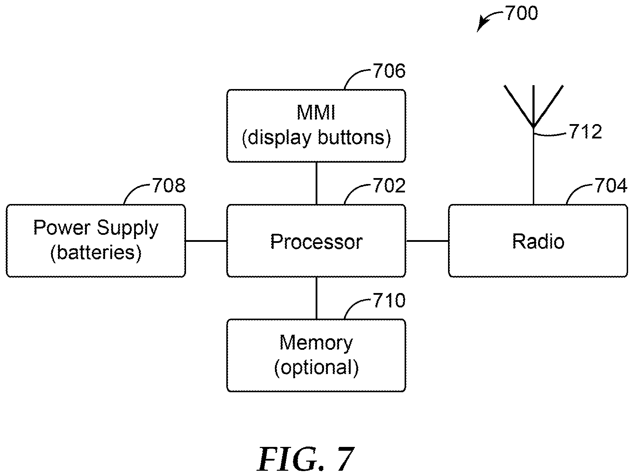

FIG. 7 shows a schematic of the electronic components of a communication device, according to various embodiments. The communication device can include an electronics package 700. The electronics package 700 can include a processor 702, such as an MCU or a CPU. The electronics package 700 can include a radio element 704. The radio element 704 can include an antenna 712. The radio element 704 can be configured to send and receive communication data to and from other devices. The electronics package 700 can include a user interface 706, such as a multimedia interface. The interface 706 can include buttons, a display screen or other components. The electronics package 700 can include a power supply 708, such as one or more batteries. In various embodiments, the electronics package can include a memory element 710. In other embodiments, the memory element 710 can be included in the processor 702, such as when the processor 702 includes an MCU.

The distance/volume relationship described can be used with the other features that enable the network to operate without a base station and have only one master device at a time. The ability to fade the audio volume supports the "one master only" aspects of the network's design, since the radio range of the system is much greater than the audible range of the human ear. As a result, the devices have a margin of error to repair or restructure the network before anything is heard. For example, if there happens to be two masters, due to intermittent interference or simply that both master devices started to transmit too far away and therefore out of range of each other, and they move into each other's range, there is risk that there are several units transmitting on the same channel. If there is such channel collision, it will not be heard, and devices will have a chance to change the channel by the time that the users of the two devices get close enough that the audio would be heard. The existence of the guest state is also a way to reduce the risk of getting multiple masters, since as soon as a communication device sees a slave it will not allow transmission, which by definition also disallows becoming a master.

In various embodiments, the network is a full duplex communication system, where a communication device can simultaneously receive and transmit data.

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration to. The phrase "configured" can be used interchangeably with other similar phrases such as arranged and configured, constructed and arranged, constructed, manufactured and arranged, and the like.

## Claims

1. A communication device (100; 200), comprising:
a radio element operatively coupled to a processor and to a memory, wherein the radio element sends and receives communication data to and from other communication devices within a network; and
a speaker operatively coupled to the processor, the speaker configured to output a sound wave based on an output from the processor,
wherein the processor is configured to store data in the memory indicating a predetermined order of time slots that are used for data communication within the network and a current status of each time slot within the network, and data further indicating that another communication device within the network is in the master state, wherein all communication devices within the network synchronize to the other communication device that is in the master state,
wherein the processor determines a distance between the communication device and the other communication device that transmits communication data to the communication device,
wherein a volume of the sound wave is reduced in proportion to the distance between the communication device and the other communication device; wherein when the distance is greater than or equal to a first threshold distance, the volume is zero; wherein the first threshold distance is at least 10 meters and less than 50 meters.

2. The communication device of claim 1, wherein the distance is calculated using a received signal strength indicator.

3. The communication device of claims 1 or 2, wherein the volume is reduced to a non-zero value when the distance is between a second threshold distance and the first threshold distance, wherein the second threshold distance is smaller than the first threshold distance.

## Patentansprüche

1. Eine Kommunikationsvorrichtung (100; 200), aufweisend:
ein Funkelement, das operativ mit einem Prozessor und einem Speicher gekoppelt ist, wobei das Funkelement Kommunikationsdaten an und von anderen Kommunikationsvorrichtungen innerhalb eines Netzwerks sendet und empfängt; und
einen Lautsprecher, der operativ mit dem Prozessor gekoppelt ist, wobei der Lautsprecher konfiguriert ist, um eine Schallwelle basierend auf einer Ausgabe von dem Prozessor auszugeben,
wobei der Prozessor konfiguriert ist, um Daten in dem Speicher zu speichern, die eine vorbestimmte Reihenfolge von Zeitrastern, die zur Datenkommunikation innerhalb des Netzwerks verwendet werden, und einen aktuellen Status jedes Zeitrasters innerhalb des Netzwerks angeben, und Daten, die ferner angeben, dass sich eine andere Kommunikationsvorrichtung innerhalb des Netzwerks im Master-Zustand befindet, wobei alle Kommunikationsvorrichtungen innerhalb des Netzwerks mit der anderen Kommunikationsvorrichtung, die sich im Master-Zustand befindet, synchronisieren,
wobei der Prozessor einen Abstand zwischen der Kommunikationsvorrichtung und der anderen Kommunikationsvorrichtung, die Kommunikationsdaten an die Kommunikationsvorrichtung überträgt, bestimmt,
wobei ein Volumen der Schallwelle proportional zu dem Abstand zwischen der Kommunikationsvorrichtung und der anderen Kommunikationsvorrichtung reduziert ist; wobei, wenn der Abstand größer oder gleich einem ersten Schwellenwertabstand ist, das Volumen null ist; wobei der erste Schwellenwertabstand mindestens 10 Meter und weniger als 50 Meter beträgt.

2. Die Kommunikationsvorrichtung nach Anspruch 1, wobei der Abstand unter Verwendung eines empfangenen Signalstärkeindikators berechnet wird.

3. Die Kommunikationsvorrichtung nach Anspruch 1 oder 2, wobei das Volumen auf einen Nicht-Null-Wert reduziert wird, wenn der Abstand zwischen einem zweiten Schwellenwertabstand und dem ersten Schwellenwertabstand liegt, wobei der zweite Schwellenwertabstand kleiner als der erste Schwellenwertabstand ist.

## Revendications

1. Dispositif de communication (100 ; 200), comprenant :
un élément radio couplé fonctionnellement à un processeur et à une mémoire, dans lequel l'élément radio envoie et reçoit des données de communication vers et à partir d'autres dispositifs de communication au sein d'un réseau ; et
un haut-parleur couplé fonctionnellement au processeur, le haut-parleur configuré pour délivrer en sortie une onde sonore sur la base d'une sortie provenant du processeur,
dans lequel le processeur est configuré pour stocker des données dans la mémoire indiquant un ordre prédéterminé de créneaux temporels qui sont utilisés pour une communication de données au sein du réseau et un état actuel de chaque créneau temporel au sein du réseau, et des données indiquant en outre qu'un autre dispositif de communication au sein du réseau est dans l'état maître, dans lequel tous les dispositifs de communication au sein du réseau se synchronisent à l'autre dispositif de communication qui est dans l'état maître,
dans lequel le processeur détermine une distance entre le dispositif de communication et l'autre dispositif de communication qui transmet des données de communication au dispositif de communication,
dans lequel un volume de l'onde sonore est réduit proportionnellement à la distance entre le dispositif de communication et l'autre dispositif de communication ; dans lequel lorsque la distance est supérieure ou égale à une première distance seuil, le volume est de zéro ; dans lequel la première distance seuil est d'au moins 10 mètres et inférieure à 50 mètres.

2. Dispositif de communication selon la revendication 1, dans lequel la distance est calculée en utilisant un indicateur de force de signal reçu.

3. Dispositif de communication selon les revendications 1 ou 2, dans lequel le volume est réduit à une valeur différente de zéro lorsque la distance est comprise entre une deuxième distance seuil et la première distance seuil, dans lequel la deuxième distance seuil est plus petite que la première distance seuil.
